# EUROPÄISCHE PATENTSCHRIFT

(11) **EP 1 711 122 B1**
(45) Veröffentlichungstag und Bekanntmachung des Hinweises auf die Patenterteilung: **05.11.2014**
(21) Anmeldenummer: 05716619.1
(22) Anmeldetag: 27.01.2005
(51) Int. Cl.: A61C 13/00, A61K 6/027, A61C 13/083, C04B 38/00, C04B 41/45, C04B 41/49, C04B 41/50, C04B 35/48, C04B 35/488

(54) **ANORGANISCH-ANORGANISCHER COMPOSITWERKSTOFF, VERFAHREN ZU DESSEN HERSTELLUNG und dessen Verwendung**
INORGANIC-INORGANIC COMPOSITE MATERIAL, METHOD FOR PRODUCING THE SAME and its use
MATERIAU COMPOSITE ANORGANIQUE-ANORGANIQUE, PROCEDE DE FABRICATION et son utilisation

(30) Priorität: 27.01.2004 DE 102004004059
(43) Veröffentlichungstag der Anmeldung: 18.10.2006
(73) Patentinhaber: Ivoclar Vivadent AG, 9494 Schaan (LI)
(72) Erfinder: ROTHBRUST, Frank, A-6820 Frastanz (AT); RITZBERGER, Christian, 9472 Grabs (CH); HÖLAND, Wolfram, CH-9494 Schaan (LI); RHEINBERGER, Volker, CH-9490 Vaduz (LI)
(74) Vertreter: Fitzner, Uwe
(86) Internationale Anmeldenummer: PCT/EP2005/050444
(87) Internationale Veröffentlichungsnummer: WO 2005/070322

(56) Entgegenhaltungen:
- EP-A- 0 328 316
- WO-A-88/02742
- WO-A-99/52467
- WO-A1-2004/032986
- WO-A1-2012/128149
- US-A- 4 626 392
- US-A- 4 925 492
- US-A- 5 447 967
- US-A1- 2002 162 482
- INWANG I B ET AL: "ZIRCONIA INFILTRATION TOUGHENING OF NA-BETA-ALUMINA" JOURNAL OF MATERIALS SCIENCE, CHAPMAN AND HALL LTD. LONDON, GB, Bd. 36, Nr. 7, 1. April 2001 (2001-04-01), Seiten 1823-1832, XP001048276 ISSN: 0022-2461
- YUNG-JEN LIN ET AL: "Cyclic infiltration of porous zirconia preforms with a liquid solution of mullite precursor" JOURNAL OF THE AMERICAN CERAMIC SOCIETY AMERICAN CERAMIC SOC USA, Bd. 84, Nr. 1, Januar 2001 (2001-01), Seiten 71-78, XP002331268 ISSN: 0002-7820
- ZHAO R ET AL: "Support and CoPcTS effects on the catalytic activity and properties of molybdenum sulfide catalysts" PETROL SCI TECHNOL; PETROLEUM SCIENCE AND TECHNOLOGY JUNE/JULY 2001, Bd. 19, Nr. 5-6, Juni 2001 (2001-06), Seiten 495-502, XP008048279
- DURAN P ET AL: "Nanostructured and near defect-free ceramics by low-temperature pressureless sintering of nanosized Y-TZP powders" JOURNAL OF MATERIALS SCIENCE CHAPMAN & HALL UK, Bd. 32, Nr. 17, 1. September 1997 (1997-09-01), Seiten 4507-4512, XP002331269 ISSN: 0022-2461

## Beschreibung

Die vorliegende Erfindung betrifft einen anorganisch-anorganischen Compositwerkstoff, ein Verfahren zu dessen Herstellung sowie dessen Verwendung.

Die Verwendung von Oxidkeramiken im Dentalbereich ist seit langem bekannt. Beispielsweise ist aus der WO 95/35070 ein Verfahren bekannt, bei dem die Keramik infiltriert wird. Die Herstellung einer derartigen Oxidkeramik ist jedoch relativ aufwendig; allein der Schritt der Infiltration, die bei dieser Lösung vorgenommen wird, benötigt beispielsweise vier Stunden.

Ferner ist aus der EP-A1-834 366 ein keramisches Werkstück bekannt, das durch Infiltration eines geschmolzenen Matrixmaterials in die Hohlräume eines Rohlings erzeugt wird. Es ist eine besondere Teilchengröße mit zwei verschiedenen Größenstufen für die Infiltrationssubstanz vorgesehen. Bei dieser Lösung wird ein Umhüllungsmaterial verwendet, das mit einem wasserlöslichen Salz versehen wird und nach Infiltration und Verfestigung entfernt werden muss. Nachteilig bei dieser Lösung ist die hohe Prozesstemperatur bei der Formgebung und die komplizierte gerätetechnische Herstellung.

Aus der Veröffentlichung WO 88/02742 ist die Herstellung eines oberflächengehärteten Keramikteils bekannt. Ein poröser Al₂O₃-Rohling wird mit einem Zirkonoxid-Infiltrationsstoff infiltriert, so dass das fertige Keramik-Werkstück einen Volumenanteil von 1 bis 15% Zirkonoxid enthält und hierdurch die so gebildete Aluminiumoxidkeramik verfestigt wird. Dieses Verfahren erfordert mehrere Infiltrationsschritte und ist geeignet, wenn eine Keramik wie Aluminiumoxid an der Oberfläche verstärkt werden soll, während es sich versteht, dass eine Zirkonoxid-Keramik mit hohem kritischem Spannungsintensitätsfaktor durch Hinzufügen von Zirkonoxid nicht weiter verstärkt werden kann. Eine derartige Aluminiumoxid-Keramik zeigt nur oberflächlich eine Verstärkung, und zur Realisierung dieser Lösung müssten die Verfahrensschritte häufig hintereinander angewendet werden.

Ferner ist aus der DE-A1-198 52 740 die Ausbildung eines Käppchens oder von anderen Zahnersatzteilen aus Aluminiumoxid-Keramik bekannt. Das vorgesinterte Formstück wird im heißen Zustand mit einem Glas infiltriert, das durch Einbringen in den Sinterofen schmilzt. Die Infiltrierung benötigt bei dieser Lösung einen Zeitraum von ca. vier Stunden und eine hohe Prozesstemperatur. Zudem ist der Prozess nicht ausreichend steuerbar und die mechanischen Eigenschaften des Zahnersatzteils sind verhältnismäßig schlecht.

Außerdem ist aus der DE-A1 100 61 630 die Herstellung eines vollkeramischen Zahnersatzes aus einer Dentalkeramik aus Zirkonoxid und Aluminiumoxid bekannt, wobei eine Infiltration mit Glas in einem Volumenbereich von 0 - 40 % vorgenommen wird. Diese Lösung erfordert bei Verwendung als Zahnersatz die zusätzliche Realisierung einer Verblendkeramik. Nachteilig ist die geringe Festigkeit der durch die Glasphase verfestigten Keramik, sowie die geringe Transluzenz.

Ferner ist aus der EP-A1-1 025 829 die Herstellung einer Kappe aus einem mit einem Glas infiltrierten Keramikmaterial bekannt. Für die Bereitstellung der erwünschten Transluzenz sind zwei zusätzliche Schichten vorgesehen, die auf die Kappe aufgebracht werden. Bei der Bereitstellung von Dentalrestaurationsteilen ist es nämlich aus ästhetischen Gründen wesentlich, den natürlichen Zahnschmelz nachzubilden, der eine erhöhte Transluzenz hat, während Dentin eine geringere Transluzenz hat. Hierzu dienen die Schichten 7 und 6 gemäß der vorstehend genannten Lösung. Bei einem derartigen Verfahren ist die umständliche Weiterverarbeitung durch Aufmahlen des infiltrierten Festkörpers zu einem Pulver nachteilig, aber auch die geringe Festigkeit der durch die Glasphase verfestigten Keramik.

Aus der DE-A1 101 07 451 ist ein Verfahren zur Herstellung eines Oxidkeramik-Formteils bekannt, bei dem aus einer Zirkon- oder Aluminiumoxidkeramik nach dem Vorsintern über ein großes CAD/CAM-System gefräst wird. Anschließend wird der gefräste Rohling bei 1200 bis 1650 °C drucklos gesintert. Die so hergestellte Oxidkeramikphase weist eine geringere Transluzenz als eine heißisostatisch gepresste Keramik auf, die mechanischen Eigenschaften sind schlechter als bei heißisostatisch gepressten Keramiken, und diese Keramiken sind sehr schlecht ätzbar.

Aus der CH-A5 675 120 sind Zirkonoxid-Mischkeramiken bekannt, die 7 bis 12 Gewichtsprozent TiO₂ und andere kornwachstumshemmende und zur Stabilisierung geeignete Zusätze enthalten. Es können auch 0 bis 30 Gewichtsprozent Al₂O₃ enthalten sein. Die Pulvergemische werden bei 1100 bis 1300°C gesintert. Der Nachteil dieser Keramiken ist, dass die erzielbare Dichte nur bei 98% der theoretischen Dichte (TD) liegt und damit geringer als bei heißisostatisch gepressten Keramiken ist. Die Erzeugung eines retentiven Musters auf der Oberfläche ist bei dieser Keramik nur sehr schwer möglich.

In der WO 03/057065 wird beschrieben, wie ein Oxidkeramikformteil aus Aluminiumoxid hergestellt wird, bei dem die mittlere Korngröße nicht größer als 1 µm ist und der Transluszenzgrad 70% von T*nm, integriert über den Wellenlängenbereich von 475-650 nm beträgt. Bei diesem Patent wird zur Erreichung dieser Eigenschaften der Prozessschritt des heißisostatischen Pressens angewendet, wobei zuerst aus einem pulvrigen Rohstoff ein Körper einer gewünschten Form erhalten wird, der in einem thermischen Prozess gesintert wird, so dass der Körper nur noch geschlossene Porösität erhält. Zur Erreichung der endgültigen Eigenschaften wie Transluszenz, Enddichte und Endfestigkeit wird der gesinterte Formkörper heißisostatisch nachverdichtet, um eine vollständige Verdichtung zu erreichen. Dieser Prozessschritt ist sehr aufwendig: Bei 100 bis 219 MPa und einer Temperatur von 1200°C bis 1300°C wird der Körper verdichtet.

Aus US 4,626,392 ist es bekannt, poröse Keramiken zu infiltrieren und dadurch eine Umhüllung der Oberfläche herzustellen.

Aus R.D. Skala, I.M. Low, R. Richards: Synthesis and properties of mullite/zirconia-toughened alumina (ZTA) composites, International Ceramic Monographs, Volume 1, Numbers 1 und 2, 1994 ist es bekannt, eine Mullitphase in der Oberfläche eines Grundwerkstoffes aus ZTA durch Infiltration einer Lösung aus TEOS zu erzeugen.

Schließlich ist aus der Publikation "Heißisostatisches Pressen" von B.W. Hofer (Heißisostatisches Pressen, in: Technische Keramische Werkstoffe, Fachverlag Deutscher Wirtschaftsdienst, Hrsg. Kriegesmann J./ Kap. 3.6.3.0, pp, 1-15, Januar 1993) bekannt, dass durch heißisostatisches Pressen Werkstoffe erzeugt werden, die im Gefüge kaum noch Fehlstellen aufweisen und Dichten erreichen, die fast den theoretisch möglichen Wert erreichen. Um diese Eigenschaften zu erreichen, sind jedoch bei den Sintertemperaturen von oberhalb 1000°C Drücke von 30 bis 200 MPa erforderlich. Ferner muss dieser Prozess in inerter Gasatmosphäre erfolgen. Dementsprechend aufwendig ist die Verfahrenstechnik und die daraus resultierende gerätetechnische Realisierung. Nachteilig ist somit der kostenaufwendige Prozess, die komplizierte Verfahrenstechnik und die damit verbundenen hohen Investitions- und Energiekosten, so dass es beispielsweise für kleinere Unternehmen wie Dentallabors nicht möglich ist, diesen Prozess selbst durchzuführen.

Demgegenüber liegt der Erfindung die Aufgabe zugrunde, ein Verfahren zur Herstellung eines anorganisch-anorganischen Compositwerkstoffes zu schaffen, der für den Dentalbereich geeignet ist und eine kostenoptimierte Herstellung bei gleichzeitig verbesserter ästhetischer Wirkung erlaubt, ohne die Gebrauchseigenschaften zu verschlechtern, insbesondere die Möglichkeit zur Erzeugung eines retentiven Musters zu bieten und die Befestigung auf dem natürlichen Zahn zu gewährleisten.

Diese Aufgabe wird durch ein Verfahren zur Herstellung eines anorganisch-anorganischen Compositwerkstoffs für den Einsatz im Dentalbereich, bei welchem
- nach formgebender Verarbeitung und Vorsintern eines Oxidkeramik Pulvers aus ZrO₂ einem überwiegend tetragonalen Phasenanteil ein offenporiges, kristallines Oxidkeramik-Formteil hergestellt wird,
- auf dieses ein Infiltrationsstoff bei Raumtemperatur aufgebracht wird, der aus einer Vorstufe einer nichtmetallisch-anorganischen Phase, oder einer amorphen Glasphase und einem Lösungsmittel, oder aus einer hydrolysierbaren Verbindung eines Metalls besteht, oder ein Alkoholat eines Metalls, oder einen Vorläufer eines silikatischen Glases, enthält,
- die Penetration des Infiltrationsstoffs in das Oxidkeramik-Formteil während einer Infiltrationszeit von weniger als 10 Minuten unter Vakuum durchgeführt wird,
- das Oxidkeramik-Formteil bei Luftatmosphäre und Umgebungsdruck zu dem anorganisch-anorganischen Compositwerkstoff bei einer Temperatur von 1000°C bis 1600°C auf eine Dichte von mindestens 99,5% der theoretischen Dichte verdichtend gesintert wird,
- dadurch eine Bruchzähigkeit von mindestens 6,5 MPa*m^{1/2}, gemessen nach dem Indenterverfahren, erhalten wird und
- nach dem Fertigsintern die äußere Formgebung des Compositwerkstoffs durch materialabtragende Bearbeitung und/oder Ätzen erfolgt.

Bei der Herstellung wird hierbei von einem offenporigen kristallinen Oxidkeramik-Formteil ausgegangen, dessen Poren bei Raumtemperatur unter Vakuum vorzugsweise im Bereich von 2 bis 90% der Dicke der offenporigen Oxidkeramik mit einem Infiltrationsstoff mit oder ohne Lösungsmittel, mit oder ohne färbende Zusätze, gefüllt werden. Die gesamte beschichtete Oxidkeramik wird bei hohen Temperaturen einem Dichtsinterprozeß unterworfen. Hierdurch entsteht ein mehrschichtiger Compositwerkstoff, der im Inneren einen transluzenten Bereich bzw. Kern aufweist.

Im äußeren Bereich ist der Compositwerkstoff weiß, farblos oder farbig.

Gegenstand der Erfindung ist ferner ein anorganisch-anorganischer Compositwerkstoff, welcher Komponenten von Oxidkeramiken und von Infiltrationsstoffen enthält und dessen hauptsächliche Verwendung im Dentalbereich liegt.

Bei der Realisierung des erfindungsgemäßen Verfahrens wird als Ausgangsmaterial ein Pulver oder eine Pulvermischung bereitgestellt, die aus entsprechender Oxidkeramik oder einer Mischkeramik aufgebaut sind. Das Pulver liegt bevorzugt als Granulat vor, es wird vorzugsweise mit einem Bindemittel versetzt. Bevorzugt werden hierfür die Metalloxide teilweise oder vollständig mit mindestens einer Monolage eines organischen Polymers belegt.

Die erfindungsgemäß eingesetzten Bindemittel bzw. Polymere sind vorzugsweise wasserlöslich.

Zu den erfindungsgemäß bevorzugten Bindemitteln bzw. Polymeren zählen synthetische Polymere oder Biopolymere. Zu den erfindungsgemäß einsetzbaren Polymeren gehören z. B. Polyvinylalkohol, Polyethylenimin, Polyacrylamid, Polyethylenoxid, Polyethylenglycol, Homo- und Copolymere (Meth)acrylsäure, Maleinsäure, Vinylsulfonsäure- und Vinylphosphonsäure, Polyvinylpyrrolidon, als Biopolymere sind insbesondere Stärke, Alginate, Gelatine, Celluloseether, beispielweise Carboxymethylcellulose einsetzbar.

Bei der Realisierung des erfindungsgemäßen Verfahrens wird während oder nach der formgebenden Verarbeitung, z. B. durch uniaxiales oder kaltisostatisches Pressen des pulverförmigen Ausgangsmaterials ein Vorsintern auf vorzugsweise 50% der theoretischen Dichte in Umgebungsluftatmosphäre drucklos vorgenommen.

Bei der Herstellung des kristallinen offenporigen Oxidkeramik-Formteils bei hohen Temperaturen werden die Bindemittel bzw. organischen Polymere rückstandslos entfernt, wodurch die kristalline, offenporige Oxidkeramik eine Dichte von 10 bis 90% der theoretischen Dichte enthält.

Die Vorsintertemperatur beträgt deutlich weniger als die Sintertemperatur und kann beispielsweise zwischen 600 und 1300°C, bevorzugt zwischen 800 und 1200°C liegen.

In einer Variante der Erfindung enthält das kristalline, offenporige Oxidkeramik-Formteil im wesentlichen Zirkonoxid mit Zusätzen von Yttriumoxid, vorzugsweise im Bereich von 0,1 bis 10 mol-%.

In einer erfindungsgemäß besonders bevorzugten Form enthält das Zirkonoxid Zusätze von 2 bis 4 mol-% Yttriumoxid, 2,5 bis 15 mol-% Ceroxid, 2,5 bis 5 mol-% Erbiumoxid, 2,5 bis 5 mol-% Scandiumoxid oder 0,1 bis 15 mol-% Titanoxid oder Gemische der genannten Oxide in den genannten Bereichen.

Zur Erreichung der erfindungsgemäßen Lösung ist es günstig, das teilweise gesinterte, offenporige Oxidkeramik-Formteil zu evakuieren. Dabei sind erfindungsgemäß weniger als 100 mbar, vorzugsweise weniger als 50 mbar, z.B. ca. 20 mbar, bevorzugt. Der Unterdruck wird beispielsweise 1 Min. bis 4 h angelegt, damit ein Druckausgleich im Sinne der Ausbildung des Vakuums im Inneren der teilweise gesinterten, offenporigen Oxidkeramik erfolgt. Bei dem Evakuieren werden die Gase aus der porösen teilweise gesinterten Oxidkeramik entfernt. Während dieser Zeit wird das erfindungsgemäße Sol für die Bereitstellung des auszubringenden weiteren Materials angerührt. In an sich bekannter Weise wird das Aufbringen dieses weiteren Materials im Anschluss an das Evakuieren in der Unterdruck-Atmosphäre vorgenommen. Auf das in der beschriebenen Weise hergestellte kristalline, offenporige Oxidkeramik-Formteil wird ein Infiltrationsstoff vorzugsweise unter Vakuum und bei Raumtemperatur aufgebracht.

Für das anschließende Dichtsintern beträgt die Dicke der Infiltrationsstoffschscht bevorzugt 2 bis 30%, vorzugsweise 5 bis 20% und besonders bevorzugt etwa 10 bis 15%, jeweils bezogen auf den größten Durchmesser des Oxidkeramik-Formteils. Für die Einfärbung kann eine wesentlich größere Dicke der Infiltrationsschicht erforderlich sein als für das Dichtsintern:
5 - 90%, vorzugsweise 10 - 90%, besonders bevorzugt 30 - 85% der Dicke des Formteils.

Der Infiltrationsstoff kann in Gegenwart eines Lösungsmittels aufgebracht werden. Als Lösungsmittel kommen sowohl polare als auch unpolare Lösungsmittel in Betracht. Beispiele sind Wasser oder Alkohol.

Der Infiltrationsstoff kann entweder die Vorstufe einer nichtmetallisch-anorganischen-Phase, einer amorphen Glasphase, einer hydrolisierbaren Verbindung eines Metalls oder eines Alkoholats eines Metalls sein.

Die Vorstufe der nichtmetallsch-anorganischen-Phase kann ionogene oder kovalente Verbindungen der Elemente der folgenden Haupt- (bezeichnet mit a) und Nebengruppen (bezeichnet mit b) aufweisen: la, IIa, IIIa, IVa, IIIb, IVb, Vb, Vlb, VIIb und Vlllb. Ebenso kommen Gemische der genannten Elemente in Betracht.

Bevorzugt sind erfindungsgemäß kovalente Verbindungen des Siliziums oder des Zirkons. Ebenso können bekannte färbende ionogene Verbindungen der Elemente Cer, Mangan, Vanadium, Eisen und andere zum Einsatz kommen.

Der den inneren Bereich zumindest teilweise abdeckende Infiltrationsstoff aus nichtmetallisch-anorganischer Phase ist chemisch gegenüber Säuren wesentlich weniger beständiger als die reine kristalline Oxidkeramik im Kern bzw. inneren Bereich. Die Schicht kann leicht angeätzt werden. Die chemische Beständigkeit ist jedoch nicht wesentlich geringer als im Kern bzw. inneren Bereich, wenn die abdeckende Schicht nur mikrokristallines Zirkoniumoxid aufweist.

Durch die geringere chemische Beständigkeit des den inneren Bereich zumindest teilweise abdeckenden Infiltrationsstoffs kann dort ein retentives Muster durch Ätzen erreicht werden. Die Tiefe dieses Musters lässt sich durch das Ätzmittel, dessen Konzentration und der Zeiteinwirkung im Ätzvorgang bestimmen. Sie entspricht erfindungsgemäß höchstens der Dicke der abdeckenden Schicht, da der Kern bzw. innere Bereich gegenüber dem chemischen Angriff wesentlich beständiger ist.

Die amorphe Glasphase kann ein silikatisches Glas sein. Bevorzugt sind unter anderem alkalifreie Silikatgläser.

Als hydrolysierbare Verbindung kann unter anderem Tetraethylorthosilikat Verwendung finden. Ebenso kommen hydrolysierbare Silane zum Einsatz.

Bevorzugt sind ferner Alkoholatverbindungen. Das heißt, es kommen Alkoholate von Metallen, ausgewählt aus der Gruppe der Elemente Aluminium, Titan, Zirkonium oder Silicium zum Einsatz.

Besonders bevorzugt sind Alkoholate des Siliciums oder Aluminiums. Erfindungsgemäß können auch Gemische der erwähnten Alkoholate verwendet werden.

Erfindungsgemäß besonders günstig ist es, wenn die Infiltrationsstoffe solförmig vorliegen und zu einem Gel weiterreagieren. Sie sind bevorzugt Vorläufer-Produkte eines glasigen oder keramischen Materials. Das Sol wird in eine Unterdruckkammer, z.B. einen Exsikkator, eingebracht. Dabei muss der Infiltrationsstoff den Formkörper vollständig bedecken. Durch das bestehende Vakuum unterstützt, erfolgt die Penetration des Infiltrationsstoffes in den Oxidkeramik-Formkörper über eine erfindungsgemäß recht kurze Zeit von etwa einer bis weniger als 10 Minuten. Durch den Unterdruck wird das angerührte Sol in die Unterdruckkammer eingesaugt und es erfolgt eine Penetration über eine erfindungsgemäß recht kurze Zeit wie beispielsweise bevorzugt 1 Minute. Hierdurch entsteht eine Infiltrationsstoffschicht mit der erwünschten Schichtstärke, die sich über die Infiltrationsdauer, die Viskosität des Sols, die Porosität des teilweise gesinterten Keramik-Formteils aber auch die Größe des Unterdrucks einstellen lässt.

Um die geforderte Ästhetik der modernen Zahnheilkunde erreichen zu können, müssen die Formteile unterschiedliche Farben aufweisen. Deshalb können dem Infiltrationsstoff selbst die färbenden Komponenten zugesetzt werden oder aber die Einfärbung wird in einem gesonderten Verfahrensschritt erfolgen.

Überraschend lässt sich die Ausbildung der Schicht des Infiltrationsstoffes auf einfache Weise in recht gleichmäßiger Dicke realisieren. Durch die kurze Infiltrationszeit hat der Infiltrationsstoff lediglich Zeit, die Oberfläche des Formlings zu bedecken. Beim Belüften der Unterdruckkammer wird der Infiltrationsstoff durch das Vakuum im Formkörper praktisch in diesen hineingesaugt. Es versteht sich, dass die Viskosität des bevorzugt gelförmigen Infiltrationsstoffs die Eindringtiefe maßgeblich beeinflusst. Eine geringe Viskosität erzeugt aufgrund der Kapillarwirkung der Poren des offenporigen Oxidkeramik-Formteils eine große Schichtstärke der Infiltrationsstoffschicht, während eine hohe Viskosität die Eindringtiefe reduziert.

Nach Belüftung der Unterdruckkammer und Verfestigen des aufgebrachten Sols zu einem Gel wird das Brennen bei der vorgewählten Sintertemperatur in Luftumgebungsatmosphäre vorgenommen. Die Sintertemperatur beträgt 1000 bis 1600°C, und das Sintern erfolgt unter Umgebungsdruck in Luftatmosphäre. Durch das erfindungsgemäße Verfahren werden die Sintereigenschaften der reinen kristallinen Oxidkeramik derart verbessert, dass ein nahezu vollkommenes Dichtsintern der Keramik erreicht wird.

Erfindungsgemäß ergibt sich durch das Sintern bei beispielsweise 1480°C eine Dichte des Compositwerkstoffes von 99,9% der theoretischen Dichte, wobei es günstig ist, dass während des Sinterns in Umgebungsluft gearbeitet werden kann.

Das offenporige Oxidkeramik-Formteil kann in der erwünschten Form vorgepresst hergestellt werden. Es ist möglich, ein Fräsen oder eine andere Art der spanabhebenden Bearbeitung entweder nach dem Vorsintern oder nach dem Dichtsintern vorzunehmen. Im ersten Fall besteht der Vorteil, dass die Formgebung aus dem offenporigen Oxidkeramik-Formteil relativ leicht möglich ist, da die Endhärte noch nicht erreicht ist. Demgegenüber müssen im zweiten Fall für die Bearbeitung des anorganisch-anorganischen Compositwerkstoffes sehr harte Werkzeuge wie Diamantschleifscheiben verwendet werden, wobei allerdings die Geometrie nicht durch einen weiteren Schrumpfprozess beeinflusst wird.

Das erfindungsgemäße Verfahren erlaubt die Herstellung eines anorganisch-anorganischen Compositwerkstoffs aus Zirkonoxid mit einem überwiegend tetragonalen Phasenanteil und nur sehr geringem kubischen Phasenanteil, vorausgesetzt, die Sintertemperatur von 1500°C wird nicht überschritten. Erfindungsgemäß lässt sich in überraschend einfacher Weise eine Transluzenz erzeugen, die mit dem heißisostatischen Pressvorgang vergleichbar ist. Zusätzlich ergibt sich gegenüber den heißisostatischen Presskeramiken der Vorteil, dass eine Adhäsion durch Ätzen an der Infiltrationsstoffschicht ohne weiteres möglich ist.

Die Erfindung lässt sich besonders günstig in Verbindung mit Zirkonoxidkeramik oder Mischkeramiken mit hohem Zirkonoxidanteil einsetzen, wobei auch geeignete Dotierungen - wie mit Yttrium - und Beimischungen günstig sein können. Bei diesen hochfesten Keramiken ist die Biegefestigkeit im Kern bzw. inneren Bereich hoch, die Bruchzähigkeit hingegen ist besonders hoch in der Infiltrationsstoffschicht, die aus der offenporigen, kristallinen Oxidkeramik und dem die offenporige, kristalline Oxidkeramik durchdringenden bzw. in die Poren der Oxidkeramik eindringenden Infiltrationsstoff besteht.

Der so hergestellte erfindungsgemäße Compositwerkstoff enthält damit im reinen kristallinen Oxidkeramikkern optische und mechanische Eigenschaften, die sogar die selben Werte wie heißisostatisch gepresste Materialien aufweisen. Die Eigenschaften der reinen kristallinen Oxidkeramik werden offenbar aufgrund der Dichtheit des Gefüges realisiert.

Die erfindungsgemäße Lösung erlaubt es in überraschend einfacher Weise, die nach dem bisher bekannten Stand der Technik mit dem heißisostatischen Pressen erreichbaren Festigkeitseigenschaften zu erreichen, wobei das zeitaufwendige heißisostatische Pressverfahren vermieden werden kann. Die Festigkeit liegt bei einem erfindungsgemäß erhaltenen anorganisch-anorganischen Compositwerkstoff bei nicht weniger als 800 MPa in der Biaxialfestigkeit. Die bruchmechanischen Eigenschaften der reinen kristallinen Oxidkeramik ergaben mit dem Indenterverfahren und der Berechnung nach Evans & Charles kritische Spannungsintensitätsfaktoren K_{IC} von beispielsweise 6,95 MPa*m^{1/2} und lagen vergleichsweise sogar höher als bei entsprechenden heißisostatisch gepressten Keramiken. Überraschend ist dabei, dass die Eigenschaften von heißisostatisch gepressten Materialien sogar bei überwiegend tetragonalem Zirkoniumoxid als kristalliner Oxidkeramik nachgestellt worden sind. Überraschend lässt sich mit Hilfe der Infiltrationsstoffschicht im Vakuum und dem anschließenden thermischen Behandeln eine Festigkeitserhöhung des inneren Bereichs der Oxidkeramik erreichen. Insbesondere stabilisiert die Umhüllung oder mindestens teilweise Abdeckung der offenporigen Oxidkeramik mit dem Infiltrationsstoff dieses so weit, dass sich eine deutlich verbesserte Bruchzähigkeit von größer als 6,5 MPa*m^{1/2} erreichen lässt.

Im Anschluss an das Fertigsintern erfolgt eine materialabtragende Bearbeitung, die bevorzugt durch CAD/CAM-Technik erfolgt. Dabei wird die abdeckende Schicht vollständig oder teilweise abgetragen und der transluzente Kern kommt an die Oberfläche. Hierdurch kann die endgültige Formgebung des auszubildenden Compositwerkstoffs erfolgen. Bleibt abschnittsweise noch die abdeckende Schicht an der Oberfläche erhalten, wird diese hieran anschließend angeätzt.

Ein retentives Muster kann in den Bereichen erhalten werden, wo die äußere Schicht bestehen bleibt. Gleichzeitig tritt an den Stellen, wo die Schicht abgetragen wurde, ein dichtes, transluzentes Gefüge an die Oberfläche. Dadurch wird überraschend einfach eine ästhetische Wirkung erzeugt, die der von heißisostatisch gepressten vergleichbaren Werkstoffen entspricht. Durch die hohe Dichtheit des Gefüges wird eine höhere Lichtdurchlässigkeit (Transluzenz) erreicht, die der heißisostatisch gepresster Keramik entspricht.

Die so hergestellten Compositwerkstoffe können insbesondere im Dentalbereich Verwendung finden. Hierzu zählen insbesondere der Einsatz als dentale Restauration, Implantat, Implantatbestandteil oder orthodeontisches Produkt. Bei der dentalen Restauration kommen insbesondere dentale Gerüste, Kronen, Teilkronen, Brücken, Kappen, Schalen, Verblendungen, Abutment oder Stiftaufbauten in Betracht.

Der Compositwerkstoff kann hierbei als monolithischer Block oder als Zylinder vorliegen. Diese können adhäsiv zum Beispiel auf einem Halter befestigt sein. Der monolithische Block und Zylinder sind so ausgestaltet, dass sie maschinell bearbeitbar, das heißt spanabhebend bearbeitbar sind.

Überraschenderweise führt die erfindungsgemäße Lösung auch dazu, dass die ästhetische Wirkung eines Dentalrestaurationsteils, wenn das erfindungsgemäße Oxidkeramikteil als Dentalrestaurationsteil verwendet wird, deutlich verbessert ist. Der innere Bereich der kristallinen Oxidkeramik ist transluzent.

Die erfindungsgemäße Lösung ermöglicht den Wegfall einer zusätzlichen Verblendkeramik, womit auch die hiermit verbundenen Probleme entfallen, wie die längere Verfahrensdauer, die Haftungsprobleme und die erforderliche Schichtstärke der Verblendkeramik. Demgegenüber ist die erfindungsgemäße Lösung auch besonders für die Realisierung von feingliedrigen, aber dennoch ästhetisch sehr ansprechenden Dentalerzeugnissen geeignet. Insbesondere wenn die Infiltrationsstoffschicht eine silikatische Phase aufweist, kann sie beispielsweise mit HF weggeätzt werden und eine adhäsive Verbindung mit anderen Werkstoffen realisiert werden.

Zur Ausbildung eines Dentalrestaurationsteil kann jedoch auch eine einschichtige Verblendung aufgebracht werden, um eine noch bessere ästhetische Wirkung zu erzeugen. In den Bereichen, in deren ein retentives Muster erzeugt wurde, ist die Anwendung beliebiger Klebe- und Zementierungswerkstoffe möglich. Bevorzugt ist die Anwendung adhäsiver Systeme. Erfindungsgemäß ist eine adhäsive Befestigung überraschend einfach möglich, was bei vergleichbaren heißisostatisch gepressten Werkstoffen nicht möglich ist. Bei den Klebehilfsmitten sind chemisch lichthärtende oder dualhärtende Mittel bevorzugt. Zementierungswerkstoffe sind beispielsweise Zinkphosphate. Der erfindungsgemäße Compositwerkstoff bietet somit auf einfache Weise eine bessere adhäsive Befestigungsmöglichkeit bei gleicher ästhetischer Wirkung wie heißisostatisch gepresste vergleichbare Materialien. Außerdem ist der Sintervorgang wesentlich einfacher und ist dadurch im Gegensatz zum heißisostatischen Pressvorgang erheblich kostengünstiger.

Auch ist grundsätzlich möglich, die Vorteile des erfindungsgemäßen Verfahrens bei anderweitig verwendeten Keramikformteilen auszunutzen, beispielsweise auch bei der Bereitstellung der Teile künstlicher Gelenke, wobei die oberflächliche Infiltrationsstoffschicht günstige Eigenschaften hinsichtlich der geringen Abrasion bei gleichzeitig guter Härte aufweist und eine glasharte Oberfläche bietet, aber auch bei chirurgischen Implantaten oder Teilen dieser. Auch endodontische Teile wie Wurzelstifte lassen sich mit dem erfindungsgemäßen Verfahren herstellen, wobei sich auch die gute Adhäsion an anderen Formteilen ausnutzten lässt.

Die Dauer der Herstellung eines erfindungsgemäßen anorganischanorganischen Compositwerkstoff hängt stark von der Zeitdauer ab, die für die Exsikkation, also die Herstellung des Unterdrucks, erforderlich ist. Zwar benötigt die Bereitstellung des Infiltrationsstoffs bei einem günstigen Ausführungsbeispiel der Erfindung eine nicht unbeachtliche Rührzeit und Standzeit. Bei zeitlicher Abstimmung kann jedoch das Anrühren des Infiltrationsstoffs bereits vorab begonnen werden, also beispielsweise während der Rohling gepresst wird oder spätestens während des Vorsinterns, so dass diese Zeit nicht in die Zykluszeit für die Bereitstellung eines fertigen Oxidkeramik-Formteils einfließt.

Die reine Infiltrationszeit kann beispielsweise 1 oder 2 Minuten betragen und dauert jedenfalls weniger als 10 Minuten, während sich das Fertigsintern bei maximaler Temperatur in beispielsweise 30 Minuten realisieren lässt. Der gesamte Sinterprozeß für das Fertigsintern erfolgt in 5 bis 9 Stunden.

Weitere Vorteile, Einzelheiten und Merkmale ergeben sich aus der nachfolgenden Beschreibung mehrerer Ausführungsbeispiele anhand der Zeichnungen. Es zeigen:
- Fig. 1: die Realisierung der erfindungsgemäßen Infiltration zur Bereitstellung der Infiltrationsschicht an dem Oxidkeramikteil in einer Ausführungsform der Erfindung ;
- Fig. 2: die Infiltrationsschichtstärke, aufgetragen über die Infiltrationszeit;
- Fig. 3: eine schematische Darstellung eines Sinterofens für das infiltrierte Oxidkeramikteil;
- Fig. 4: eine schematische Ansicht eines ersten erfindungsgemäßen Verfahrens in einer Ausführungsform; und
- Fig. 5: eine schematische Ansicht eines erfindungsgemäßen Verfahrens in einer zweiten Ausführungsform.

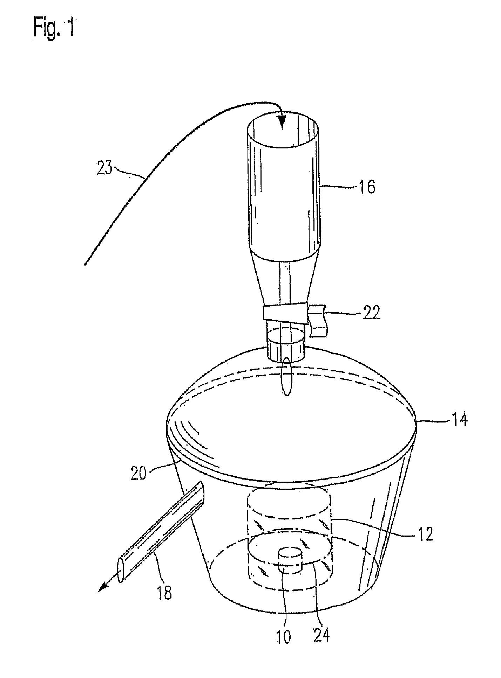

Aus Fig. 1 ist schematisch ersichtlich, in welcher Weise eine erfindungsgemäße Oxidkeramik infiltriert werden kann. Der Rohling 10 ist vorgesintert und liegt in einem Becherglas 12. Das Becherglas 12 steht in einem Exsikkator 14, an dessen Deckel ein Tropftrichter 16 montiert ist.

Ferner weist der Exsikkator in an sich bekannter Weise einen Unterdruck-Anschlussschlauch 18 auf, der mit einer Unterdruckpumpe verbunden ist. In an sich bekannter Weise schließt der Exsikkator durch Unterdruck an seinem geschliffenen Dichtungsrand 20 und lässt sich nach dem Belüften öffnen. Der Tropftrichter hat keinen Druckausgleich, jedoch ist ein Stellhahn 22 vorgesehen, der feinfühlig die Einstellung der Tropfrate ermöglicht.

Die Infiltration erfolgt dem Grunde nach so, dass ein vorbereitetes Sol 23 als Infiltrationsstoff in den Tropftrichter 16 eingebracht wird, nachdem der Exsikkator 14 auf einen Unterdruck von beispielsweise 20 mbar gebracht worden ist.

Sobald der gewünschte Druck erreicht ist, wird der Stellhahn 22 in der gewünschten Weise geöffnet. Der Becher 12 füllt sich bis zur Füllhöhe 24 mit Infiltratsstoff, das später in den Rohling 10 eintritt. Der Infiltrationsstoff kann abhängig von der Ausgestaltung der Auflagefläche in dem Becher im wesentlichen auf allen Seiten gleichmäßig in das Formteil eindringen.

Auch wenn in Fig. 1 ein zylindrischer Rohling 10 dargestellt ist, versteht es sich, dass in der Praxis vorgegebene Formkörper realisiert werden, die auf den Boden des Bechers 12 aufgestellt sind und mit Infiltrationsstoff benetzt werden. Nach einer Infiltrationszeit von 1 Min. hat sich bereits eine Infiltrationsschicht in einer Stärke von 0,3 bis 0,6 mm herausgebildet.

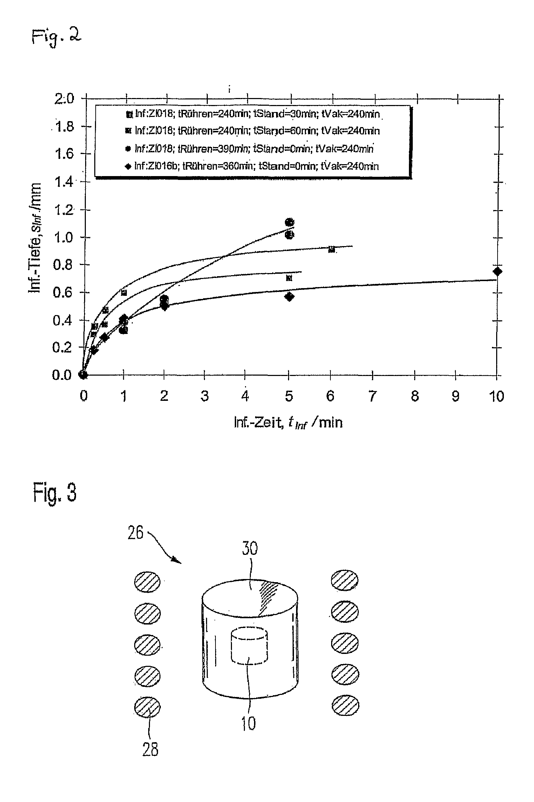

Aus Fig. 2 ist die Infiltrationstiefe aufgetragen über die Infiltrationszeit ersichtlich. Erfindungsgemäß ist es günstig, dass die Schichtstärke in weiten Bereichen an die Erfordernisse anpassbar ist. So kann bei sehr feingliedrigen und dünnen Oxidkeramikteilen auch mit einer recht geringen Infiltrationsschichtstärke gearbeitet werden, die dennoch eine gute Festigkeit des inneren Bereichs ermöglicht.

In Fig. 3 ist ein Sinterofen 26 schematisch dargestellt. Er weist eine Vielzahl von Heizelementen 36 auf, die einen Tiegel 30, in dem der Rohling 10 nach Infiltration eingebracht ist, aufgenommen ist. Bevorzugt ist in an sich bekannter Weise der Tiegel mit einem Pulverbett ausgerüstet, und es erfolgt ein Fertigsintern des Rohlings 10 zu dem Compositwerkstoff innerhalb von weniger als einer Stunde. Die äußeren Abmessungen der Rohlinge können mit zylindrischer Form mit einem Durchmesser von ca. 5 bis ca. 20 mm und einer Länge bis ca. 100 mm betragen, die quaderförmigen Rohlinge haben bevorzugte Abmessungen (L*B*H) von ca. 10 mm*10 mm*5 mm bis zu ca. 150 mm*150 mm*25 mm. Das daraus hergestellte Dentalformteil besitzt durch die Anwendung materialabtragender Verfahren dann konsequenterweise kleinere Abmessungen.

Im Folgenden werden Ausführungsbeispiele im Einzelnen beschrieben.

### Ausführungsbeispiel 1

Als Rohstoff für den Rohling 10 wird ein Trockenpressgranulat aus ZrO₂-Pulver verwendet. Es ist mit Yttrium dotiert und weist auch andere Komponenten wie Al₂O₃ auf. Es können beispielsweise Trockenpressgranulate der Firma TOSOH mit den Bezeichnungen TZ-3YB und TZ-8YB eingesetzt werden, die eine Primärkristallitgröße von 280 - 400 nm und eine Granulatgröße von 50 µm haben, aber auch das Granulat TZ-3Y20AB, das sich durch 20% Al₂O₃ zusätzlich auszeichnet und im übrigen den anderen Granulaten entspricht. Gemäß der nachstehenden Tabelle wurden den Zirkonoxidkeramiken pulvrige, oxidische Rohstoffe in bestimmten mol-Anteilen zugesetzt.

| Rohstoff Oxid | TZ3YB | | | | | TZ8YB | |
|---|---|---|---|---|---|---|---|
| CeO₂ / mol-% | 2..5 | 5 | 8 | 10 | 15 | - | " |
| Er₂O₃ | 2..5 | 5 | - | - | - | - | - |
| CeO₂ + Er₂O₃ / mol-% | 3+3 | - | - | - | - | - | - |
| SC₂O₃/ mol-% | 3 | - | - | - | - | - | - |
| TiO₂/mol-% | 10 | 15 | - | " | ' | 10 | 15 |

Für die erfindungsgemäßen Versuche wurden zylindrische Pressformen mit Innendurchmessern von 12 und 16 mm verwendet. Das Pressen des Rohlings 10 erfolgt in an sich bekannter Weise mit Drücken von 500, 600 bis 1100 bar, wobei der Pressdruck in 5 Sekunden erreicht wurde, dann 15 Sekunden der Maximaldruck gehalten wurde und dann innerhalb von weiteren 5 Sekunden der Druck wieder abgebaut wurde.

Anschließend hieran erfolgte die Vorverfestigung, die zugleich die Entbinderung einschloss, gemäß der nachstehenden Tabelle, bei der die aufeinander folgenden Zeitabschnitte des Vorsintern mit Rampe bezeichnet sind:

| Rampe | ϑRn /°C | ϑRn+1 /^{°c} | Aufheizrate | | Zeit | |
|---|---|---|---|---|---|---|
| | | | /K min-¹ | K h⁻¹ | /min | /h |
| 1 | 0 | 320 | 2.5 | 150 | 128 | 2:08 |
| 2 | 320 | 470 | 1 | 60 | 150 | 2:30 |
| 3 | 470 | 1100 | 2.5 | 150 | 252 | 4:12 |
| 4 | 1100 | 1100 | 0 | 0 | 20 | 0:30 |
| | | | | | 560 | 9:20 |

Das Pulver enthielt Bindemittel als Presshilfsmittel und durch das Trockenpressen und das anschließende Entbindern wird das eingesetzte Bindemittel ausgebrannt und der Rohling porös. Hieran schließt sich das Vorsintern an. Nach dem Vorsintern entsteht ein Formteil mit ca. 50%TD.

Das Evakuieren des Rohlings 10 erfolgte in dem Glas-Exsikkator 14 auf ein Enddruck von etwa 20 mbar. Durch die vergleichsweise lange Evakuierungszeit, die jedenfalls mehr als 1 Stunde betrug, wurden die in dem porösen Rohling eingeschlossenen Gase weitestgehend entfernt.

Als Infiltrationsstoffe wurden solche auf der Basis von Tetraethylorthosilikat (TEOS) verwendet. TEOS wurde zusammen mit Wasser mit einem Katalysator aus Aluminiumnitratnonahydrat (Al(NO₃)₃) x 9 H₂O zusammen zu einem Sol verrührt. In Abhängigkeit von der Rührzeit und der anschließenden Standzeit reagiert das Sol langsam zu einem Gel und kondensiert in einer glasähnlichen Struktur. Es wurde auch Cernitrathexahydrat dem eigentlichen Katalysator hinzugegeben.

Es wurde versucht, das Infiltrat so bereitzustellen, dass sich nach der Infiltration in der Infiltrationsschicht schnell ein festes Gel ausbildet, das sich nach dem Sintern zu einer silikatischen Glasphase umsetzt. Die Infiltrationsschicht besteht erfindungsgemäß aus überwiegend tetragonaler kristalliner Zirkonoxidphase sowie amorpher Glasphase, im wesentlichen aus kondensierten TEOS, während der Kern des erfindungsgemäßen Oxidkeramikteils im wesentlichen aus Zirkonoxid mit der vorstehend genannten Dotierung besteht, ebenfalls überwiegend in tetragonaler Phase.

Die Untersuchung verschiedener Mischungsverhältnisse aus TEOS, Al(NO₃)₃ x 9 H₂O sowie Ce(NO₃)₃ x 6 H₂O ergab die Tendenz, dass bei längerer Rührzeit die Verfestigungszeit, also die Standzeit bis zur Verfestigung abnimmt. Die Summe der Zeiten betrug in der Regel 6 bis 7 Stunden, wobei bei Verzicht auf Cernitrathexahydrat sich bei bestimmten Mischungsverhältnissen bereits nach einer Rührzeit von 3 Stunden eine Verfestigung einstellte.

Der vorbereitete Infiltrationsstoff wurde dann in den Tropftrichter eingeführt und der Stellhahn 22 geöffnet, und zwar soweit, dass der Rohling nach dem Einlassen des Sols jedenfalls vollständig bedeckt wurde, aber nicht zu viel Infiltrationsstoff in dem Tropftrichter die Belüftung verzögerte.

Die Belüftung erfolgte durch vollständiges Öffnen des Stellhahns, nachdem der Tropftrichter 16 leer war.

Das in den Exsikkator eindringende und hierdurch unter Unterdruck gesetzte Infiltrationsstoff schäumte zunächst auf, wobei der Unterdruck aufrecht erhalten wurde.

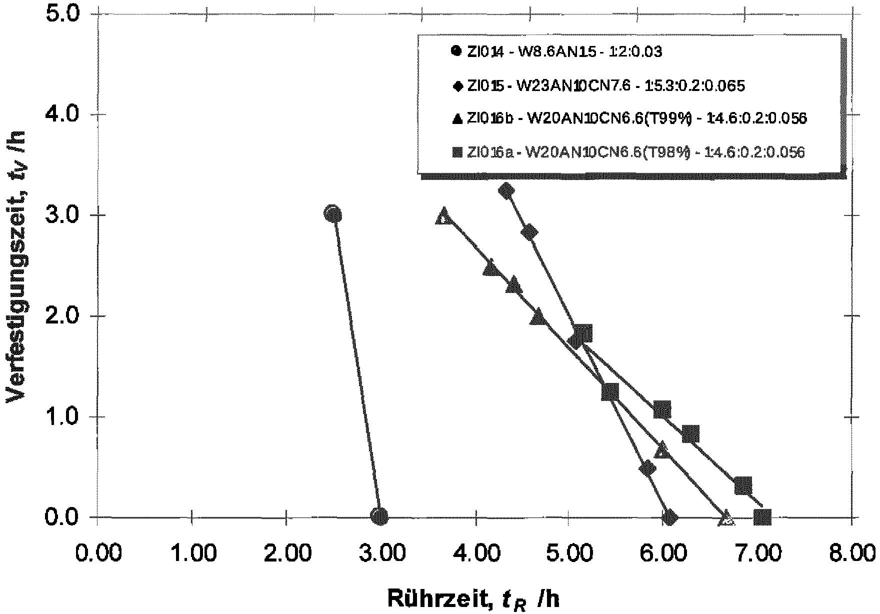

Wie aus Fig. 2 ersichtlich ist, hängt die Infiltrationstiefe nicht nur von der Viskosität des eingesetzten Infiltrationsstoffs (vgl. den Unterschied zwischen ZIO15 und ZIO16b) ab, sondern insbesondere auch von der Rührzeit und der Standzeit des Infiltrationsstoffs.

Es ist beabsichtigt, die zeitliche Abstimmung so zu wählen, dass die Verfestigung des Infiltrats nach der oder während der Infiltration einsetzt. Es ist unkritisch, wenn der Infiltrationsstoff bereits verfestigt ist, wobei auch bei flüssigem Infiltrationsstoff noch eine Abdichtung der Schicht gegeben ist, nachdem auch ein flüssiges Infiltrationsstoff die Poren des Rohlings 10 verschließt.

Infiltratstoffreste auf dem Keramikrohling wurden dann kurzerhand mit einem Tuch beseitigt und es erfolgt eine Lufttrocknung, wobei bei dem erfindungsgemäß durchgeführten Versuchen die Lufttrocknung über 1 bis 2 Stunden erfolgt.

Das Fertigsintern erfolgte in dem gleichen Sinterofen, der für das Vorsintern eingesetzt wurde, und die Brennkurve wurde gemäß der nachstehenden Tabelle in 3 Zeitabschnitten realisiert.

| Rampe | ϑRn/°C | ϑRn+I / ^{°C} | Aufheizrate | | Zeit | |
|---|---|---|---|---|---|---|
| | | | /K min⁻¹ | K h⁻¹ | /min | /h |
| 1 | 0 | 1000 | 5 | 300 | 200 | 3:20 |
| 2 | 1000 | 1480 | 2,5 | 150 | 192 | 3:12 |
| 3 | 1480 | 1480 | 0 | 0 | 30 | 0:30 |
| | | | | | 422 | 7:02 |

Hierbei wurden die Rohlinge in einem Quarzfritte- oder Al₂O₃-Pulverbett in einem Aluminiumoxid-Tiegel gekapselt.

Im Ergebnis erwiesen die probeweise gesinterten Rohlinge eine Infiltrationsstoffschichtstärke auf, die in Abhängigkeit von der Infiltrationszeit verschieden dick war.

Es ergab sich eine gute Transluzenz des Oxidkeramik-Formteils, und im Inne der Rohlinge lag eine tetragonale Phase mit durchschnittlicher Kristalligröße von 0,4 bis 0,5 Mikrometer vor.

Die geringste erreichte Infiltrationstiefe betrug bei der vorstehend genannten Basis der Infiltrate aus TEOS zirka 180 Mikrometer.

### Ausführungsbeispiel 2

In einem modifizierten Ausführungsbeispiel wurde anstelle von TEOS ein Zirkonium(IV)-propylat verwendet. Es wurde unter atmosphärischem Druck mit Wasser in den Poren des Rohlings zu Zirkoniumoxidpartikeln ausgefällt. Auch hierdurch konnten die Poren geschlossen werden, wobei sich kristalline Partikel in den Poren abscheiden, die dem eigentlichen Grundmaterial entsprechen. Die so erreichte minimale Schichtstärke der Infiltrationsstoffschicht betrug etwa 50 Mikrometer.

### Ausführungsbeispiel 3

Insgesamt ergab sich durch das erfindungsgemäße Verfahren ein anorganisch-anorganischer Compositwerkstoff mit hoher Bruchzähigkeit, wobei die Transluzenz-Eigenschaften denen von Zirkoniumkeramiken (TZP) entsprachen, die unter Verwendung des heißisostatischen Pressens hergestellt wurden.

| Probe | Ptr | t_{Inf}. | V_{Br} | Dichte (im Kern) | Transluzenz (Vergleich) | HV 10 | K_{lC} -Wert- (Evan s& Charl es) |
|---|---|---|---|---|---|---|---|
| | /bar | /min | /°c | Ig crn⁻³ | % | /MPa | /MPa m^{1/2} |
| Al 238 | 1000 | 1 | 1480 | 6,08 | 70,5 | --- | --- |
| Al 237 | 1000 | 5 | 1480 | 6,10 | 75,0 | --- | --- |
| Al 240 | 1000 | 2 | 1480 | --- | -.-- | 13220 | 6.95 |
| Al 245 | 900 | 1 | 1480 | --- | --- | 13055 | 6,55 |
| Al 246 | 900 | 1 | 1480 | 6,08 | 72,2 | --- | --- |
| Metoxit Bio-HIP ZrO₂ (Vergleichsmessung) | nicht bekannt | nicht bekannt | nicht bekannt | 6,07 | 70,3 | 12850 | 6,65 |
| Denzir 00 HIP-ZrO₂ (Vergleichsmessung) | nicht bekannt | nicht bekannt | nicht bekannt | 6,10 | 76,4 | 12830 | 6,70 |
| Al 253 | 900 | nicht infiltriert | 1480 | 5,88 | 56,4 | --- | - -- |
| Al 254 | 900 | nicht infiltriert | 1480 | -~- | -- - | 12900 | 6,17 |

Aus dem Vorstehenden wird deutlich, dass die herkömmlich gesinterten und nicht nach dem erfindungsgemäßen Beispiel hergestellten Proben wesentlich schlechtere Eigenschaften in Bezug auf die Lichtdurchlässigkeit und die Bruchzähigkeit aufweisen.

### Ausführungsbeispiel 4

Außerdem wurden einige Proben im Anschluss an das erfindungsgemäße Verfahren mit HF geätzt und es ergab sich ein Ätzmuster, das der Dauer des Ätzens entsprach. Es wurden auch Ätzversuche durchgeführt, bei denen die äußere Schicht komplett weggeätzt wurde und nur der innere Oxidkeramikkern verblieb. Durch Abdecken der Infiltrationsstoffschicht mit Wachsen oder einer Polymerschicht können auch gezielt Stellen unangeätzt bleiben.

### Ausführungsbeispiel 5

Entsprechend der oben angeführten Art und Weise wurden ein zylindrischer Formkörper mit einem Durchmesser von 12 mm und einer Höhe von 25 mm durch Pressen eines Granulates der Firma Tosoh (TZ 3YB) hergestellt und anschließend bei 1100°C erfindungsgemäß vorgesintert. Zur formgebenden Bearbeitung wurde im Anschluss auf einer Fräsmaschine Cerec® Inlab der Firma Sirona eine Krone mit Übermaß hergestellt. Das Übermaß musste dabei so eingestellt werden, dass nach dem Schrumpf beim Sintern und dem teilweise Wegätzen der abdeckenden Schicht eine optimale Passgenauigkeit auf dem Modellgerüst erzeugt wurde. Erfindungsgemäß wurde das so erhaltene teilweise gesinterte und gefräste Oxidkeramik-Formteil mit einer abdeckenden Schicht in Vakuum versehen, wobei das aufgebrachte Material etwas in die Oberfläche des porösen teilweise gesinterten Formteils eingedrungen ist. Beim anschließenden Sintervorgang in Luftatmosphäre und Umgebungsluftdruck wurde dann eine fertig gesinterte Krone erzeugt, die nach dem teilweisen Wegätzen der abdeckenden Schicht einerseits ein retentives Muster aufwies und andererseits eine gute Passgenauigkeit auf dem Modellgerüst zeigte.

### Ausführungsbeispiel 6:

In einem weiteren Versuch wurde eine Lösung bestehend aus 2,03 Ma.-% FeCl₃, 1,08 Ma.-% MnCl₂ * 4H2O, 7,0 Ma.-% PEG20000 und dem Lösungsmittel Wasser 2 min lang gemäß der Erfindung infiltriert und anschließend getrocknet.

Nach dem Dichtsintern ergab sich eine gelb-braune Färbung des Materials nach LAB-Werten wie folgt:
L*= 81.6
a* = 0.39
b* = 17.48
C= 17.46

Dagegen zeigte die ungefärbte, drucklos gesinterte ZrO₂₋Keramik des Typs (TZ3YB von Tosoh) folgende LAB-Werte:
L*= 90.45
a* = -0.57
b* = 4.36
C= 4.39

Die Messung der L, a, b- Werte erfolgt nach dem British Standard BS 5612 (1978).

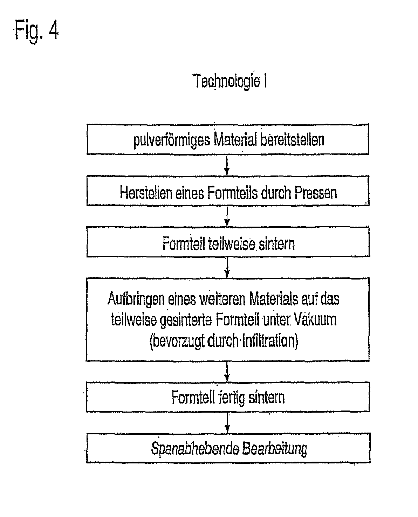

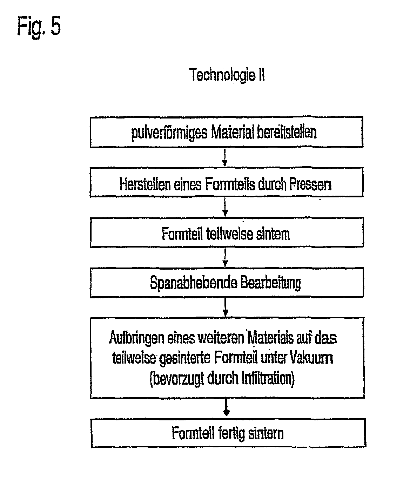

Fig. 4 und 5 zeigen je Darstellung der Abfolge der Verfahrensschritte in verschiedenen Ausführungsformen des erfindungsgemäßen Verfahrens. Unterschiedlich ist die spanabhebende Bearbeitung vor der Infiltration bei dem als Technologie II bezeichneten Verfahren, während bei dem Verfahren gemäß Technologie I (Fig. 4) die spanabhebende Bearbeitung nach dem Fertigsintern erfolgt. Das Verfahren gemäß Fig. 4 erfordert einen höheren Werkzeugaufwand im Hinblick auf die hohe Festigkeit des fest fertiggesinterten Dentalersatzteils₁ bietet jedoch eine etwas größere Präzision.

Insgesamt ergaben sich durch die erfindungsgemäßen Versuche Oxidkeramiken hoher Bruchzähigkeit von mindestens 6,5 Mpa*m^{1/2}, wobei die Transluzenzen denen von Oxidkeramiken entsprachen, die unter Verwendung des heißisostatischen Pressens hergestellt wurden.

## Patentansprüche

1. Verfahren zur Herstellung eines anorganisch-anorganischen Compositwerkstoffs für den Einsatz im Dentalbereich, bei welchem
- nach formgebender Verarbeitung und Vorsintern eines Oxidkeramik Pulvers aus ZrO₂ mit einem überwiegend tetragonalen Phasenanteil ein offenporiges, kristallines Oxidkeramik-Formteil hergestellt wird,
- auf dieses ein Infltrationsstoff bei Raumtemperatur aufgebracht wird, der aus einer Vorstufe einer nichtmetallisch-anorganischen Phase, oder einer amorphen Glasphase und einem Lösungsmittel, oder aus einer hydrolysierbaren Verbindung eines Metalls besteht, oder ein Alkoholat eines Metalls, oder einen Vorläufer eines silikatischen Glases, enthält,
- die Penetration des Inflltrationsstoffs in das Oxidkeramik-Formteil während einer Infiltrationszeit von weniger als 10 Minuten unter Vakuum durchgeführt wird,
- das Oxidkeramik-Formteil bei Luftatmosphäre und Umgebungsdruck zu dem anorganisch-anorganischen Compositwerkstoff bei einer Temperatur von 1000°C bis 1600°C auf eine theoretische Dichte von mindestens 99,5% der theoretischen Dichte verdichtend gesintert wird,
- dadurch eine Bruchzähigkeit von mindestens 6,5 MPa*m^{1/2}, gemessen nach dem Indenterverfahren, erhalten wird und
- nach dem Fertigsintern die äußere Formgebung des Compositwerkstoffs durch materialabtragende Bearbeitung und/oder Ätzen erfolgt.

2. Verfahren nach einem der vorhergehenden Ansprüche, **dadurch gekennzeichnet, dass** zwecks formgebender Verarbeitung das Oxidkeramik enthaltende Pulver mit einem organischen Bindemittel versehen und gepresst wird.

3. Verfahren nach einem der vorhergehenden Ansprüche, **dadurch gekennzeichnet, dass** das organische Bindemittel ein ethylenisches Wachsmittel, insbesondere ein ethylenisches Wachs, ein Polyvinylharz, ein Polyvinylpyrrolidon, Polyvinylacetat, ein Polyvinylbutyral und/oder Cellulose, ist.

4. Verfahren nach einem der vorhergehenden Ansprüche, **dadurch gekennzeichnet, dass** das Vorsintern bei einer Temperatur von 600 bis 1300°C erfolgt.

5. Verfahren nach einem der vorhergehenden Ansprüche, **dadurch gekennzeichnet, dass** der Infiltrationsstoff unter Vakuum aufgebracht wird.

6. Verfahren nach einem der vorhergehenden Ansprüche, **dadurch gekennzeichnet, dass** bei weniger als 40 mbar, penetriert wird.

7. Verfahren nach Anspruch 4, **dadurch gekennzeichnet, dass** bei 10 bis 30 mbar penetriert wird.

8. Verfahren nach einem der vorhergehenden Ansprüche, **dadurch gekennzeichnet, dass** der Infiltrationsstoff in einer Schichtdicke von 2 bis 90% der Dicke der vorgesinterten offenporigen kristallinen Oxidkeramik aufgebracht wird.

9. Verfahren nach Anspruch 8, **dadurch gekennzeichnet, dass** die Schichtdicke des Infiltrationsstoffs 2 bis 30% der Dicke des dichtgesinterten anorganisch-anorganischen Compositwerkstoffs beträgt.

10. Verfahren nach Anspruch 9, **dadurch gekennzeichnet, dass** die Schichtdicke 5 bis 20% beträgt.

11. Verfahren nach einem der vorhergehenden Ansprüche, **dadurch gekennzeichnet, dass** der Infiltrationsstoff für das Dichtsintern in einer Schichtdicke von 5 - 90% der Dicke des vorgesinterten Oxidkeramik-Formteils aufgetragen wird.

12. Verfahren nach Anspruch 11, **dadurch gekennzeichnet, dass** der Infiltrationsstoff in einer Schichtdicke von 10 bis 90% aufgetragen wird.

13. Verfahren nach einem der vorhergehenden Ansprüche, **dadurch gekennzeichnet, dass** der Infiltrationsstoff in Gegenwart eines Lösungsmittels aufgebracht wird.

14. Verfahren nach Anspruch 13, **dadurch gekennzeichnet, dass** als Lösungsmittel Wasser oder Alkohol eingesetzt werden.

15. Verfahren nach Anspruch 1, **dadurch gekennzeichnet, dass** vor der Infiltration eine weitere äußere Formgebung des Compositwerkstoffs durch materialabtragende Bearbeitung erfolgt.

16. Verfahren nach einem der vorhergehenden Ansprüche, **dadurch gekennzeichnet, dass** auf der Oberfläche des Compositwerkstoffs wenigstens abschnittsweise ein Klebehilfsmittel aufgetragen und/oder ein weiterer Werkstoff befestigt wird.

17. Verfahren nach einem der vorhergehenden Ansprüche, **dadurch gekennzeichnet, dass** auf der Oberfläche des Compositwerkstoffs wenigstens abschnittsweise eine mindestens einschichtige Beschichtung aufgetragen wird, die insbesondere nach dem Auftragen einer weiteren thermischen Behandlung unterzogen wird.

18. Verfahren nach Anspruch 15, **dadurch gekennzeichnet, dass** anschließend an das teilweise Sintern des Compositwerkstoffs mit einem Übermaß von 10 bis 50% eine materialabtragende Bearbeitung zur Formgebung erfolgt.

19. Verfahren nach Anspruch 17, **dadurch gekennzeichnet, dass** die materialabtragende Bearbeitung mit einem Übermaß von 15 bis 30% erfolgt.

20. Verfahren nach einem der vorhergehenden Ansprüche, **dadurch gekennzeichnet, dass** das Oxidkeramik enthaltende Pulver zu einem offenporigen Oxidkeramik-Formteil in der Form eines monolithischen Blocks oder Zylinders verarbeitet wird.

21. Verfahren nach Anspruch 20, **dadurch gekennzeichnet, dass** der monolithische Block oder Zylinder spanabhebend bearbeitet wird.

22. Verfahren nach einem der vorhergehenden Ansprüche, **dadurch gekennzeichnet, dass** das Oxidkeramik-Formteil Oxide der Metalle Hf, Y, Ce, Sc und/oder Ti enthält.

23. Verfahren nach einem der vorhergehenden Ansprüche, **dadurch gekennzeichnet, dass** das Oxidkeramik-Formteil Zusätze von 0,1 bis 10 mol-% Yttriumoxid enthält.

24. Verfahren nach einem der vorhergehenden Ansprüche, **dadurch gekennzeichnet, dass** das Zirkonoxid Zusätze von 2 bis 10 mol-% Yttriumoxid oder von 2.5 bis 15 mol-% Ceroxid oder 2.5 bis 5 mol-% Erbiumoxid oder 2.5 bis 5 mol-% Scandiumoxid oder von 0.1 bis 15 mol-% Titandioxid oder Gemische von zwei oder mehreren der vorgenannten Oxide in den genannten Mengen enthält.

25. Verfahren nach Anspruch 24, **dadurch gekennzeichnet, dass** das Zirkoniumoxid Zusätze von 2 bis 4 mol-% Yttriumoxid enthält.

26. Verfahren nach einem der vorhergehenden Ansprüche, **dadurch gekennzeichnet, dass** der Infiltrationsstoff ein silikatisches Glas ist.

27. Verfahren nach einem der vorhergehenden Ansprüche **dadurch gekennzeichnet, dass** die hydrolysierbare Verbindung ein hydrolysierbares Silan oder Alkoholat eines Metalls, Elemente ausgewählt aus der Gruppe Al, Ti, Zr oder Si enthält.

28. Verfahren nach einem der vorhergehenden Ansprüche, **dadurch gekennzeichnet, dass** die Vorstufe der nichtmetallisch-anorganischen Phase ionogene oder kovalente Verbindungen der Elemente der Gruppen la, IIa, IIIa, IVa, IIIb, IVb, Vb, VIb, Vllb, Vlllb enthält, wobei a die Hauptgruppen und b die Nebengruppen des Periodensystems der Elemente bezeichnen.

29. Verfahren nach einem der vorhergehenden Ansprüche, **dadurch gekennzeichnet, dass** der Infiltrationsstoff kovalente Verbindungen von Si und/oder Zr enthält.

30. Verfahren nach einem der vorhergehenden Ansprüche, **dadurch gekennzeichnet, dass** der Infiltrationsstoff färbende ionogene Verbindungen, der Elemente Ce, Mn, V, Fe oder Gemische der genannten Elemente enthält.

31. Verfahren nach einem der vorhergehenden Ansprüche, **dadurch gekennzeichnet, dass** das silikatische Glas ein alkalifreies Silikatglas ist.

32. Verfahren nach einem der vorhergehenden Ansprüche, **dadurch gekennzeichnet, dass** der Infiltrationsstoff als hydrolysierbare Verbindung Tetraethylorthosilikat enthält.

33. Compositwerkstoff hergestellt in einem Verfahren in einem Verfahren nach einem der vorhergehenden Ansprüche

34. Compositwerkstoff nach Anspruch 33, **dadurch gekennzeichnet, dass** das Oxidkeramik-Formteil mindestens teilweise mit dem Infiltrationsstoff abgedeckt ist.

35. Verwendung anorganisch-anorganischen Compositwerkstoffs nach einem der Ansprüche 33 oder 34 im Dentalbereich, vorzugsweise als dentale Restauration, Implantat, Implantatbestandteil oder orthodontisches Produkt.

36. Verwendung nach Anspruch 35, **dadurch gekennzeichnet, dass** die dentale Restauration ein dentales Gerüst, eine Krone, eine Teilkrone, eine Brücke, eine Kappe, eine Schale, eine Verblendung, ein Abutment oder ein Stiftaufbau ist.

## Claims

1. A process for producing an inorganic-inorganic composite material for the use in the dental sector, in which
- after shape-imparting processing and presintering of a powder, containing oxide ceramic consisting of ZrO₂ with a mainly tetragonal phase section an open-pore, crystalline oxide ceramic shaped part is produced,
- to this an infiltration substance is applied at room temperature, which consists of a precursor of a non-metallic-inorganic phase, or an amorphous glass phase and a solution or a hydrolysable compound of a metal or contains an alcoxide of a metal or a precursor of a silicate glass,
- the penetration of the infiltration substance into the oxide ceramic shaped part is applied during an infiltration time of less than 10 minutes in vacuo,
- the oxide ceramic shaped part is sintered to the inorganic-inorganic composite material under air atmosphere and at ambient pressure in a densifying manner at a temperature of 1000°C to 1600°C, to a theoretical density of at least 99.5% of the theoretical density,
- thereby a fracture toughness of at least 6.5 MPa m^{1/2}, measured by using the indenter method, is obtained,
- the external shaping of the composite material takes place by material-removing machining and/or etching after the full sintering.

2. The process as claimed in one of the preceding claims, **characterized in that** for the shape-imparting processing the powder, containing oxide ceramic is provided with an organic binder and pressed.

3. The process as claimed in one of the preceding claims, **characterized in that** the organic binder is an ethylenic wax material, in particular an ethylenic wax, a polyvinyl resin, a polyvinyl pyrrolidone , polyvinyl acetate, a polyvinyl butyl and/or cellulose.

4. The process as claimed in one of the preceding claims, **characterized in that** the presintering takes place at a temperature of from 600 to 1300°C.

5. The process as claimed in one of the preceding claims, **characterized in that** the infiltration substance is applied in vacuo.

6. The process as claimed in one of the preceding claims, **characterized in that** the penetration is carried out at less than 40 mbar.

7. The process as claimed in claim 4, **characterized in that** the penetration is carried out at 10 to 30 mbar.

8. The process as claimed in one of the preceding claims, **characterized in that** the infiltration substance is applied in a layer thickness of from 2 to 90% of the thickness of the presintered open-pore crystalline oxide ceramic.

9. The process as claimed in claim 8, **characterized in that** the layer thickness of the infiltration substance is from 2 to 30% of the thickness of the dense-sintered inorganic-inorganic composite material.

10. The process as claimed in claim 9, **characterized in that** the layer thickness is from 5 - 20%.

11. The process as claimed in one of the preceding claims, **characterized in that** the infiltration substance for the dense-sintering is applied in a layer thickness of 5 - 90% of the thickness of the presintered oxide ceramic shaped part.

12. The process as claimed in claim 11, **characterized in that** the infiltration substance is applied in a layer thickness is 10 - 90%.

13. The process as claimed in one of the preceding claims, **characterized in that** the infiltration substance is applied in the presence of a solvent.

14. The process as claimed in claim 13, **characterized in that** the solvent used is water or alcohol.

15. The process as claimed in claim 1, **characterized in that** a further external shaping of the composite material takes place by material-removing machining prior to infiltration.

16. The process as claimed in one of the preceding claims, **characterized in that** an adhesive is applied to at least sections of the surface of the composite material, and/or a further material is attached.

17. The process as claimed in one of the preceding claims, **characterized in that** an at least one-layer coating is applied at least to sections of the surface of the composite material and is subjected to a further heat treatment in particular after it has been applied.

18. The process as claimed in claim 15, **characterized in that** a material-removing machining operation for shaping purposes with an oversize of from 10 to 50% is carried out following the partial sintering of the composite material.

19. The process as claimed in claim 17, **characterized in that** the material-removing machining operation is carried out with an oversize of from 15 to 30%.

20. The process as claimed in one of the preceding claims, **characterized in that** the powder, containing oxide ceramic is processed to form an open-pore oxide ceramic shaped part in the form of a monolithic block or cylinder.

21. The process as claimed in claim 20, **characterized in that** the monolithic block or cylinder undergoes chip-forming machining.

22. The process as claimed in one of the preceding claims, **characterized in that** the oxide ceramic shaped part contains oxides of the metals Hf, Y, Ce, Sc and/or Ti.

23. The process as claimed in one of the preceding claims, **characterized in that** the oxide ceramic shaped part contains additions of from 0.1 to 10 mol% of yttrium oxide.

24. The process as claimed in one of the preceding claims, **characterized in that** the zirconium oxide contains additions of from 2 to 10 mol% of yttrium oxide or of 2.5 to 15 mol% of cerium oxide or 2.5 to 5 mol% of erbium oxide or 2.5 to 5 mol% of scandium oxide or of 0.1 to 15 mol% of titanium dioxide or mixtures of two or more of the abovementioned oxides in the quantities indicated.

25. The process as claimed in claim 24, **characterized in that** the zirconium oxide contains additions of from 2 to 4 mol% of yttrium oxide.

26. The process as claimed in one of the preceding claims, **characterized in that** the infiltration substance is a silicate glass.

27. The process as claimed in one of the preceding claims, **characterized in that** the hydrolysable compound contains a hydrolysable silane or an alkoxide of a metal, elements selected from the group consisting of the elements Al, Ti, Zr or Si.

28. The process as claimed in one of the preceding claims, **characterized in that** the primary phase of the non-metallic-inorganic phase contains ionogenic or covalent compounds of the elements of groups Ia, IIa, IIIa, IVa, IIIb, IVb, Vb, VIb, VIIb, VIIIb, where a denotes the main groups and b the transition groups of the periodic system of the elements.

29. The process as claimed in one of the preceding claims, **characterized in that** the infiltration substance contains covalent bonds of Si and/or Zr.

30. The process as claimed in one of the preceding claims, **characterized in that** the infiltration substance contains ionogenic compounds which have a coloring action, of the elements Ce, Mn, V, Fe or mixtures of said elements.

31. The process as claimed in one of the preceding claims, **characterized in that** the silicate glass is an alkali-metal-free silicate glass.

32. The process as claimed in one of the preceding claims, **characterized in that** the infiltration substance contains tetraethyl orthosilicate as hydrolysable compound.

33. The composite material produced in a process as claimed in one of the preceding claims

34. The composite material as claimed in claim 33, **characterized in that** the oxide ceramic shaped part is at least partially covered with the infiltration substance.

35. The use of the inorganic-inorganic composite material as claimed in one of claims 33 or 34 in the dental sector, preferably as a dental restoration, implant, implant part or orthodontic product.

36. The use as claimed in claim 35, **characterized in that** the dental restoration is a dental framework, a crown, a partial crown, a bridge, a cap, a shell, a veneer, an abutment or a post structure.

## Revendications

1. Procédé pour la fabrication d'un matériau composite inorganique-inorganique à employer dans le domaine dentaire, dans lequel
- après la mise en forme et le pré-frittage d'une poudre d'oxyde céramique en ZrO₂ avec une partie de phase principalement tétragonale, on fabrique une pièce moulée en oxyde céramique cristalline à pores ouverts,
- sur celle-ci, on dépose à la température ambiante une substance d'infiltration, qui se compose d'un précurseur d'une phase non-métallique-inorganique, ou d'une phase vitreuse amorphe et d'un solvant, ou d'un composé hydrolysable d'un métal, ou qui contient un alcoolat métallique, ou un précurseur d'un verre silicatique,
- on effectue sous vide la pénétration de la substance d'infiltration dans la pièce moulée en oxyde céramique pendant un temps d'infiltration de moins de 10 minutes,
- on fritte la pièce moulée en oxyde céramique dans l'air ambiant et à la pression ambiante en un matériau composite inorganique-inorganique à une température de 1000°C à 1600°C en la comprimant à une densité d'au moins 99,5 % de la densité théorique,
- on obtient ainsi une résistance à la rupture d'au moins 6,5 MPa*m^{1/2}, mesurée selon le procédé de l'indenteur, et
- après le frittage final, on procède à la mise en forme extérieure du matériau composite par usinage avec enlèvement de matière et/ou par attaque acide.

2. Procédé selon une des revendications précédentes, **caractérisé en ce que**, pour la mise en forme, la poudre contenant de l'oxyde céramique est dotée d'un liant organique et pressée.

3. Procédé selon une des revendications précédentes, **caractérisé en ce que** le liant organique est un agent de type cire éthylénique, en particulier une cire éthylénique, une résine de polyvinyle, une pyrrolidone de polyvinyle, un acétate de polyvinyle, un butyral de polyvinyl et/ou la cellulose.

4. Procédé selon une des revendications précédentes, **caractérisé en ce que** l'on effectue le pré-frittage à une température de 600 à 1300°C.

5. Procédé selon une des revendications précédentes, **caractérisé en ce que** l'on dépose la substance d'infiltration sous vide.

6. Procédé selon une des revendications précédentes, **caractérisé en ce que** l'on effectue la pénétration à moins de 40 mbar.

7. Procédé selon la revendication 4, **caractérisé en ce que** l'on effectue la pénétration à 10 à 30 mbar.

8. Procédé selon une des revendications précédentes, **caractérisé en ce que** l'on dépose la substance d'infiltration en une épaisseur de couche de 2 à 90 % de l'épaisseur de l'oxyde céramique cristallin à pores ouverts pré-fritté.

9. Procédé selon la revendication 8, **caractérisé en ce que** l'épaisseur de couche de la substance d'infiltration vaut 2 à 30 % de l'épaisseur du matériau composite inorganique-inorganique fritté comprimé.

10. Procédé selon la revendication 9, **caractérisé en ce que** l'épaisseur de couche vaut 5 à 20 %.

11. Procédé selon une des revendications précédentes, **caractérisé en ce que** l'on dépose la substance d'infiltration pour le frittage en compression en une épaisseur de couche de 5 - 90 % de l'épaisseur de la pièce moulée en oxyde céramique pré-frittée.

12. Procédé selon la revendication 11, **caractérisé en ce que** l'on dépose la substance d'infiltration en une épaisseur de couche de 10 à 90 %.

13. Procédé selon une des revendications précédentes, **caractérisé en ce que** l'on dépose la substance d'infiltration en présence d'un solvant.

14. Procédé selon la revendication 13, **caractérisé en ce que** l'on utilise comme solvant l'eau ou un alcool.

15. Procédé selon la revendication 1, **caractérisé en ce que**, avant l'infiltration, on effectue un formage extérieur supplémentaire du matériau composite par un usinage par enlèvement de matière.

16. Procédé selon une des revendications précédentes, **caractérisé en ce que** l'on dépose au moins localement un adhésif et/ou on fixe un autre matériau sur la surface du matériau composite.

17. Procédé selon une des revendications précédentes, **caractérisé en ce que** l'on dépose au moins localement sur la surface du matériau composite un revêtement en au moins une couche, qui est soumis à un autre traitement thermique en particulier après le dépôt.

18. Procédé selon la revendication 15, **caractérisé en ce que**, à la suite du frittage partiel du matériau composite avec une surépaisseur de 10 à 50 %, on effectue un usinage par enlèvement de matière pour le formage.

19. Procédé selon la revendication 17, **caractérisé en ce que** l'on effectue l'usinage par enlèvement de matière avec une surépaisseur de 15 à 30 %.

20. Procédé selon une des revendications précédentes, **caractérisé en ce que** l'on transforme la poudre contenant de l'oxyde céramique en une pièce moulée en oxyde céramique à pores ouverts sous la forme d'un bloc ou d'un cylindre monolithique.

21. Procédé selon la revendication 20, **caractérisé en ce que** l'on usine le bloc ou le cylindre monolithique par enlèvement de copeaux.

22. Procédé selon une des revendications précédentes, **caractérisé en ce que** la pièce moulée en oxyde céramique contient des oxydes des métaux Hf, Y, Ce, Sc et/ou Ti.

23. Procédé selon une des revendications précédentes, **caractérisé en ce que** la pièce moulée en oxyde céramique contient des ajouts de 0,1 à 10 % molaires d'oxyde d'yttrium.

24. Procédé selon une des revendications précédentes, **caractérisé en ce que** l'oxyde de zirconium contient des ajouts de 2 à 10 % molaires d'oxyde d'yttrium ou de 2,5 à 15 % molaires d'oxyde de cérium ou 2,5 à 5 % molaires d'oxyde d'erbium ou 2,5 à 5 % molaires d'oxyde de scandium ou de 0,1 à 15 % molaires de dioxyde de titane ou des mélanges de deux ou plusieurs des oxydes précités dans les quantités indiquées.

25. Procédé selon la revendication 24, **caractérisé en ce que** l'oxyde de zirconium contient des ajouts de 2 à 4 % molaires d'oxyde d'yttrium.

26. Procédé selon une des revendications précédentes, **caractérisé en ce que** la substance d'infiltration est un verre silicatique.

27. Procédé selon une des revendications précédentes, **caractérisé en ce que** le composé hydrolysable contient un silane ou un alcoolate hydrolysable d'un métal, des éléments sélectionnés dans le groupe Al, Ti, Zr ou Si.

28. Procédé selon une des revendications précédentes, **caractérisé en ce que** le précurseur de la phase non-métallique-inorganique contient des composés ionogènes ou covalents des éléments des groupes Ia, IIa, IIIa, IVa, IIIb, IVb, Vb, VIb, VIIb, VIIIb, où a désigne les groupes principaux et b les sous-groupes du système périodique des éléments.

29. Procédé selon une des revendications précédentes, **caractérisé en ce que** la substance d'infiltration contient des composés covalents de Si et/ou de Zr.

30. Procédé selon une des revendications précédentes, **caractérisé en ce que** la substance d'infiltration contient des composés ionogènes colorants, des éléments Ce, Mn, V, Fe ou des mélanges des éléments précités.

31. Procédé selon une des revendications précédentes, **caractérisé en ce que** le verre silicatique est un verre au silicate sans alcalis.

32. Procédé selon une des revendications précédentes, **caractérisé en ce que** la substance d'infiltration contient de l'orthosilicate de tétraéthyle comme composé hydrolysable.

33. Matériau composite fabriqué par un procédé selon l'une quelconque des revendications précédentes.

34. Matériau composite selon la revendication 33, **caractérisé en ce que** la pièce moulée en oxyde céramique est au moins en partie recouverte par la substance d'infiltration.

35. Utilisation d'un matériau composite inorganique-inorganique selon l'une des revendications 33 ou 34 dans le domaine dentaire, de préférence comme restauration dentaire, implant, composant d'implant ou produit orthodontique.

36. Utilisation selon la revendication 35, **caractérisée en ce que** la restauration dentaire est un échafaudage dentaire, une couronne, une couronne partielle, un bridge, une coiffe de protection, une coquille, un recouvrement, un pilier ou un pivot.
